# EUROPÄISCHE PATENTANMELDUNG

(11) **EP 0 775 518 A2**
(43) Veröffentlichungstag der Anmeldung: **28.05.1997**
(21) Anmeldenummer: 96116974.5
(22) Anmeldetag: 23.10.1996
(51) Int. Cl.: B01J 20/18

(54) **Siliciumreicher Zeolith**

(30) Priorität: 22.11.1995 DE 19543469; 01.03.1996 DE 19607770; 14.03.1996 DE 19609947
(71) Anmelder: DEGUSSA AG, 60311 Frankfurt (DE)
(72) Erfinder: Frey, Thomas, 63776 Mömbris (DE); Möller, Alexander, Dr., 63571 Gelnhausen (DE); Roland, Eckehart, Dr., 63486 Bruchköbel (DE); Schelbert, Ulrich, 63755 Alzenau (DE); Deller, Klaus, Dr., 63515 Hainburg (DE)

(57) **Zusammenfassung**

Der siliciumreiche Zeolith weist ein Verhältnis SiO₂/Al₂O₃ zwischen 30 und 1000 und eine Imprägnierung mit den Metallen Kupfer und/oder Silber auf. Unter Verwendung dieses Zeolithen kann Quecksilber aus Gasen, wie zum Beispiel Abgasen von Müllverbrennungsanlagen, entfernt werden, indem man das Gas über einen siliciumreichen Zeolithen mit einem SiO₂/Al₂O₃-Verhältnis zwischen 30 und 1000, der mit Kupfer und/oder Silber imprägniert ist, führt.

## Beschreibung

Die Erfindung betrifft einen siliciumreichen Zeolithen, das Verfahren zu seiner Herstellung und das Verfahren zum Entfernen von Quecksilber aus Gasen, insbesondere aus Erdgasen, Spaltgasen und/oder Abgasen von Verbrennungsanlagen.

Quecksilber ist ein Metall, das wegen seiner besonderen physikalischen Eigenschaften bei thermischen Prozessen, insbesondere bei der Verbrennung von Abfall, in die Gasphase überführt wird und somit in die Umwelt gelangen kann.

Bei dem Prozeß der Müllverbrennung liegt das Quecksilber in dem unbehandelten Abgas zum Teil als elementares Metall, überwiegend aber als zweiwertiges Chlorid vor. Bei Kohlekraftwerken wird von einer Emission von bis 60 % des Quecksilbers in elementarer From berichtet. Dieser hohe Anteil an metallischem Quecksilber kann auf einen Anteil von 2 bis 12 % im Rahmen der Entfernung von NOₓ gesenkt werden. Eine vollständige Entfernung des metallischen Quecksilbers kann nur in einer separaten Reinigungsstufe erfolgen, weil die chemischen Bedingungen in dem Abgas so gestaltet sind, daß Quecksilberverbindungen, wie zum Beispiel Chloride, disproportionieren. Das dabei entstehende metallische Quecksilber verdampft sofort und kann dann nicht mehr ohne eine weitere Reinigungsstufe abgeschieden werden.

Es liegen somit in dem Abgas Quecksilberverbindungen und metallisches Quecksilber nebeneinander vor, die unterschiedliche Probleme bei der Abtrennung aus dem Abgas bereiten.

Es ist bekannt, Quecksilber aus Gasen zu entfernen, indem man Zeolithe, die Silberionen enthalten, einsetzt (US-A 4,874,525). Diese Zeolithe haben den Nachteil, daß sie das Quecksilber überwiegend physikalisch adsorbieren, wobei der ebenfalls adsorbierte Wasserdampf die Adsorption von Quecksilber beeinträchtigt (siehe US-A 4,101,631, Spalte 1, Zeile 45).

Es ist aus demselben Dokument US-A 4,101,631 bekannt, Quecksilberdampf selektiv aus Wasserdampf enthaltendem Gas zu entfernen, indem man das Gas mit einem Zeolithen, der Schwefel enthält, in Kontakt bringt. Als Zeolith wird dabei ein Zeolith X oder Y eingesetzt, der ein SiO₂/Al₂O₃-Verhältnis von 2 bis 20 aufweisen kann (US-A 4,101,631).

Die bei dem bekannten Verfahren gemäß dem Dokument US-A 4,101,631 eingesetzten Zeolithe sind handelsübliche hydrophile Zeolithe mit einem relativ hohen Aluminiumgehalt. Im Laufe der Beaufschlagung mit dem Quecksilber enthaltenden Gas, das auch Sauerstoff enthält, wird aus den darin ebenfalls enthaltenden Bestandteilen SO₂ und H₂O Schwefelsäure gebildet. Diese Schwefelsäure wird in den Poren des Zeolithen eingelagert und setzt sich mit dem Aluminium des Zeolithen zu Aluminiumsulfat um. Durch diesen Vorgang wird das Kristallgitter des Zeolithen allmählich zerstört, und der Zeolithformkörper zerfällt. Zumindest aber führt die gebildete Schwefelsäure zum Versotten des Adsorbens.

Das Dokument EP-A 0 638 351 beschreibt ein Verfahren zum Entfernen von metallischem und ionogenem Quecksilber aus einem Wasserdampf und SO₂ enthaltenden Abgas, wobei man das Abgas bei Temperaturen im Bereich von 20 bis 120 °C mit einem mit Schwefel imprägnierten, körnigen, hydrophoben Zeolithen vom Typ X oder Y in Kontakt bringt. Der hydrophobe Zeolith ist ein dealuminierter Zeolith mit einem Atomverhältnis Silicium : Aluminium von 20 : 1 bis 300 : 1.

Das bekannte Verfahren hat den Nachteil, daß die eingesetzten Zeolithe bei einer Temperatur von 500 bis 1000 °C regeneriert werden und dabei die Schwefelimprägnierung verlieren. Sie müssen vor dem Einsatz erneut mit Schwefel imprägniert werden (EP-A 0 638 351, Seite 2, Zeile 44).

Es besteht somit die Aufgabe, ein Verfahren zur Entfernung von Quecksilber aus Gasen zu entwickeln, bei dem das Adsorbens eine hohe Standzeit und eine einfache Regenerierungsmöglichkeit aufweist.

Gegenstand der Erfindung ist ein siliciumreicher Zeolith, welcher gekennzeichnet ist durch ein Verhältnis SiO₂/Al₂O₃ zwischen 30 und 1000 und eine Imprägnierung mit den Metallen Kupfer und/oder Silber.

Der Zeolith kann ein Zeolith vom Strukturtyp FAU, MFI oder MOR sein. In einer bevorzugten Ausführungsform kann der Zeolith ein Formkörper mit einem Bindemittelgehalt von 5 bis 50 Gewichtsprozent sein. Der Metallgehalt des imprägnierten Zeolithen kann zwischen 0,1 und 20 Gew.-% betragen. Die Metalle Kupfer und/oder Silber können sowohl in elementarer als auch in ionischer Form auf dem Zeolithen vorliegen.

Ein weiter Gegenstand ist ein Verfahren zur Herstellung des siliciumreichen Zeolithen, welches dadurch gekennzeichnet ist, daß man den Zeolithen mit einem Verhältnis SiO₂/Al₂O₃ zwischen 30 und 1000 mittels einer wäßrigen Lösung von Kupfer und/oder Silber imprägniert.

Ein weiterer Gegenstand der Erfindung ist ein Verfahren zum Entfernen von Quecksilber aus Gasen, insbesondere aus Erdgas, Spaltgas und/oder Abgas, welches dadurch gekennzeichnet ist, daß man das Gas über einen siliciumreichen Zeolithen mit einem SiO₂/Al₂O₃-Verhältnis zwischen 30 und 1000, der mit den Metallen Kupfer und/oder Silber imprägniert ist, führt.

Die eingesetzten Zeolithe können vom Strukturtyp FAU, MFI oder MOR sein. Definition und Beschreibung dieser Strukturtypen finden sich in
W.M. Meier, D.H. Olson: *Atlas of Zeolite Structures*, 3^{rd} revised ed., Butterworth-Heinemann, London 1992.

Die Herstellung aluminiumarmer, hydrophober Zeolithe, die diesen Strukturtypen zuzurechnen sind, ist in der Literatur beschrieben:
- Typ Faujasit (FAU):: J. Scherzer in T.E. Whyte, Jr., R.A. Dalla Betta, R.T.K. Baker (eds): *Catalytic Materials* (ACS Symposium Series 248), American Chemical Society, Washington, D.C. 1984, p. 157; US-Patentschrift 5,316,993.
- Typ ZSM-5 (MFI):: P.A. Jacobs, J.A. Martens: *Synthesis of High-Silica Aluminosilicate Zeolites* (Stud. Surf. Sci. Catal. 33), Elsevier, Amsterdam 1987.
- Typ Mordenit (MOR):: N.Y. Chen, *J. Phys. Chem* **80** (1976) 60-64;
M.M. Olken, J.M. Garces in R. von Ballmoos, J.B. Higgins, M.M.J. Treacy (eds.): *Proceedings from the Ninth International Zeolite Conference*, Butterworth-Heinemann, Boston 1993, p. 559.

In einer bevorzugten Ausführungsform der Erfindung kann als Zeolith ein dealuminierter Zeolith Y als geformter Körper eingesetzt werden, wie er in der US-A 5,316,993 beschrieben wird. Das Verhältnis SiO₂/Al₂O₃ kann bevorzugt 50 bis 1000 und insbesondere 100 bis 300 betragen.

Der Zeolith kann als Formkörper mit einem Bindemittelgehalt von 5 bis 50 % eingesetzt werden.

Als Bindemittel können SiO₂, Aluminiumoxide, Clay-Mineralien, wie Bentonite, Kaoline, Sepiolite oder Attapulgite sowie alle in dem Dokument US-A 5,316,993 genannten Bindemittel eingesetzt werden.

Die Imprägnierung mit Kupfer und/oder Silber kann nach den üblichen Methoden mit Salzen der Metalle vorgenommen werden. Derartige Methoden sind beschrieben beispielsweise in

J. Haber, J. H. Block, B. Delmon, *Pure & Appl. Chem*., 67, (1995), 1257-1306.

Der Metallgehalt der imprägnierten Zeolith-Formkörper kann zwischen 0,1 und 20 Prozent, bevorzugt zwischen 1 und 10 Massenprozent betragen. Nach der Imprägnierung können die Metalle entweder im ionischen Zustand belassen oder mittels bekannter Verfahrensweisen, beispielsweise durch Erhitzen unter Formiergas, Wasserstoff oder Formaldehyd teilweise oder vollständig zu den Elementen reduziert werden. Dementsprechend können die Metalle sowohl in elementarer als auch ionischer Form auf dem zeolithischen Träger vorliegen, wobei auch beide Metalle gleichzeitig Verwendung finden können.

Das Gas kann eine relative Luftfeuchte zwischen 5 und 90 Prozent aufweisen und SO₂ und/oder HCl in Mengen zwischen 0,1 und 1000 mg/Nm³ enthalten.

Bei der Ausführung des erfindungsgemäßen Verfahrens kann man die mit Quecksilber und/oder seinen Verbindungen kontaminierten Gase bei einer Raumgeschwindigkeit von 1000 - 10000 h⁻¹ und Temperaturen zwischen 65 und 100 °C durch eine Festbettschüttung, die aus Formkörpern eines Zeolithen mit einem Verhältnis von SiO₂/Al₂O₃ zwischen 20 und 1000 besteht, leiten. Die Zeolithe sind dabei vorher mit den Metallen Kupfer und/oder Silber imprägniert worden. Bei dem erfindungsgemäßen Verfahren kann bei Gasen mit einer Quecksilber-Eingangskonzentration bis zu 500 µg Hg/Nm³ durch die Adsorbtion ein maximaler Wert von 50 µg Hg/Nm³ in dem behandelten Gas sicher eingehalten werden. Dabei kann das zu entfernende Quecksilber sowohl in ionischer als auch in elementarer Form in dem Gas vorliegen. Beide Formen können durch das erfindungsgemäße Verfahren adsorbiert werden.

Die Regenerierung von mit Quecksilber beladenem Zeolith kann beispielsweise gemäß dem in der DE-A 43 02 166 beschriebenen Verfahren durchgeführt werden. Die Silber- bzw. Kupferimprägnierung wird dabei nicht entfernt.

Die Wirksamkeit des erfindungsgemäßen Verfahrens bei der Entfernung von Quecksilber aus Gasen ist überraschend, weil in der deutschen Offenlegungsschrift DE-A 41 40 969 zeolithische Träger aufgrund ihrer Porenstruktur als anfällig für unspezifische Adsorptionserscheinungen, die sich hemmend auf die Quecksilberabscheidung auswirken, bezeichnet werden.

Das erfindungsgemäße Verfahren hat gegenüber dem Verfahren gemäß US-A 4,874,525 den Vorteil, daß ein wesentlich größerer Wasseranteil in dem Abgas verkraftet werden kann. So kann bei Abgasen aus Müllverbrennungsanlagen bei 80 °C eine relative Luftfeuchtigkeit von 70 bis 90 Vol.-% gegeben sein. Dabei entspricht 1 Vol.-% einem Wassergehalt von 10.000 ppm. Dadurch , daß kein Wasser adsorbiert wird, kann sich auch keine schädliche Schwefelsäure bilden, wenn das Abgas SO₂ enthält.

Ein weiterer Vorteil des erfindungsgemäßen Verfahrens besteht darin, daß ein wesentlich höherer Hg-Gehalt in dem Abgas verarbeitet werden kann. So wird gemäß US-A 4,874,525 ein Quecksilbergehalt von 14 ppb (= 14 µg/Nm³) auf 10 pp trillion gesenkt.

Erfindungsgemäß kann dagegen der Quecksilbergehalt 300 bis 360 Mikrogramm Hg/Nm³ (µg/Nm³) sowohl an metallischem als auch an ionischem Quecksilber betragen.

Gegenüber dem Dokument EP-A 0 638 351 ergibt sich ein wesentlicher Vorteil des erfindungsgemäßen Verfahrens durch die Tatsache, daß Schwefel bei den Adsorptionstemperaturen von dem Zeolithen absublimiert. So ist aus Gmelin bekannt, daß Schwefel bei 93 °C eine 20.000-fach höhere Sublimation als bei 23 °C aufweist. Silber weist dagegen einen Siedepunkt von ∼ 2.170 °C auf. Eine Sublimation findet unter den Bedingungen der Adsorption nicht statt.

### Beispiel 1

### Herstellung von mit Silber imprägniertem, dealuminiertem Y-Zeolith

Es werden 980 g Extrudate des dealuminierten Y-Zeolithen mit SiO₂/Al₂O₃ = 200 (Vollzylinder mit einem Durchmesser von 4 mm und einer Länge von ca. 6 mm; Anteil des Bindemittels: 10 Prozent) gemäß Beispiel 5 der US-Patentschrift 5,316,993 verwendet. Diese Extrudate werden in eine rotierende Imprägniertrommel gegeben. Innerhalb von 2 min werden 700 ml einer wäßrigen Lösung von AgNO₃ (AgNO₃-Gehalt: 31,5 g) hinzugefügt. Der Imprägniervorgang ist nach ca. 10 min beendet, wenn die Extrudate die AgNO₃-Lösung vollständig aufgesaugt haben. Die imprägnierten Extrudate werden bei 120 °C 18 Stunden im Trockenschrank getrocknet und anschließend in einem Ofen bei 400 °C 3 h lang bei 400 °C unter Formiergas (5 Vol.-% Wasserstoff, 95 Vol.-% Stickstoff; 30 l/min) calciniert. Der Silbergehalt der Extrudate beträgt 2 Prozent. Das Silber liegt nach der Calcinierung in metallischer Form vor.

### Beispiel 2

### Verwendung des imprägnierten Zeolithen gemäß Beispiel 1 zur Quecksilber-Abscheidung

Das Abgas einer Müllverbrennungsanlage, das zusätzlich mit Quecksilber beaufschlagt wird, wird über ein mit zylindrischen und gemäß Beispiel 1 silberdotierten DAY-Zeolithen gefüllten Festbett unter folgenden Bedingungen geleitet. Die Adsorptionsleistung wird unter den folgenden Bedingungen ermittelt:

| | |
|---|---|
| Raumgeschwindigkeit: | 6000 h⁻¹ |
| Abgaskonzentration: | 360-390 Mikrogramm Hg/Nm³ |
| Verhältnis Hg⁰/Hg^{ionisch}: | 1 : 1 |
| Reingaskonzentration: | 11 Mikrogramm Hg/Nm³ (Grenzwert gem. 17 BlmSchV = 50 Mikrogramm Hg/Nm³) |
| Festbettemperatur: | 80 °C |
| Spezifische innere Oberfläche des DAY-Zeolithen: | 700 m²/g |
| Porendurchmesser des DAY-Zeolithen: | 0,74 nm |

Die Bestimmung der Quecksilberkonzentrationen im Abgas und im Reingas erfolgt durch Atomabsorptions-Spektroskopie nach der Kaltdampftechnik bei der für Quecksilber spezifischen Wellenlänge von 253,7 nm.

### Vergleichsbeispiel 1

Das Abgas einer Müllverbrennungsanlage, das zusätzlich mit Quecksilber beaufschlagt wird, wird über ein mit einem zylindrischen, schwefeldotierten DAY-Zeolithen gefüllten Festbett geleitet. Die Adsorptionsleistung wird unter folgenden Bedingungen ermittelt:

| | |
|---|---|
| Raumgeschwindigkeit | 6000 h⁻¹ |
| Abgaskonzentration: | 214-266 Mikrogramm Hg/Nm³ |
| Verhältnis Hg⁰/Hg^{ionisch}: | 1 : 1 |
| Reingaskonzentration: | 97-109 Mikrogramm Hg^{ionisch}/Nm³ (Grenzwert gem. 17. BlmSchV = 50 Mikrogramm Hg/Nm³) |
| Festbettemperatur: | 80 °C |
| Spezifische innere Oberfläche des DAY-Zeolithen: | 700 m²/g |
| Porendurchmesser des DAY-Zeolithen: | 0,74 nm |

Die Bestimmung der Quecksilberkonzentrationen im Abgas und im Reingas erfolgt durch Atomabsorptions-Spektroskopie nach der Kaltdampftechnik bei der für Quecksilber spezifischen Wellenlänge von 253,7 nm.

### Vergleichsbeispiel 2

Das Abgas einer Müllverbrennungsanlage, das zusätzlich mit Quecksilber beaufschlagt wird, wird über ein mit einem zylindrischen schwefeldotierten DAY-Zeolithen gefüllten Festbett geleitet. Die Adsorptionsleistung wird unter folgenden Bedingungen ermittelt:

| | |
|---|---|
| Raumgeschwindigkeit | 6000 h⁻¹ |
| Abgaskonzentration: | 400-488 Mikrogramm Hg/Nm³ |
| Verhältnis Hg⁰/Hg^{ionisch}: | 1 : 1 |
| Reingaskonzentration: | 365-387 Mikrogramm Hg/Nm³ (Grenzwert gem. 17. BlmSchV = 50 Mikrogramm Hg/Nm³) |
| Festbettemperatur: | 90 °C |
| Spezifische innere Oberfläche des DAY-Zeolithen: | 700 m²/g |
| Porendurchmesser des DAY-Zeolithen: | 0,74 nm |

- Anmerkung:: Die schlechten Adsorptionsleistungen in diesem Beispiel sind u. a. auf die beobachtete Desublimation des Schwefels zurückzuführen.

Die Bestimmung der Quecksilberkonzentrationen im Abgas und im Reingas erfolgt durch Atomabsorptions-Spektroskopie nach der Kaltdampftechnik bei der für Quecksilber spezifischen Wellenlänge von 253,7 nm.

Die Gegenüberstellung der Beispiele zeigt, daß das erfindungsgemäße Verfahren eine deutlich bessere Adsorptionsleistung aufweist.

## Patentansprüche

1. Siliciumreicher Zeolith, gekennzeichnet durch ein Verhältnis SiO₂/Al₂O₃ zwischen 30 und 1000 und eine Imprägnierung mit den Metallen Kupfer und/oder Silber.

2. Zeolith nach Anspruch 1, dadurch gekennzeichnet, daß der Zeolith ein Zeolith vom Strukturtyp FAU, MFI oder MOR ist.

3. Zeolith nach den Ansprüchen 1 und 2, dadurch gekennzeichnet, daß der Zeolith als Formkörper mit einem Bindemittelgehalt von 5 bis 50 Prozent ausgebildet ist.

4. Zeolith nach den Ansprüchen 1 bis 3, dadurch gekennzeichnet, daß der Metallgehalt der imprägnierten Zeolith-Formkörper zwischen 0,1 und 20 Gewichtsprozent, bevorzugt zwischen 1 und 10 Gewichtsprozent, beträgt.

5. Zeolith nach den Ansprüchen 1 bis 4, dadurch gekennzeichnet, daß die Metalle Kupfer und/oder Silber sowohl in elementarer als auch in ionischer Form auf dem Zeolithen vorliegen.

6. Verfahren zur Herstellung des siliciumreichen Zeolithen gemäß Anspruch 1, dadurch gekennzeichnet, daß man den Zeolithen mit einem Verhältnis SiO₂/Al₂O₃ zwischen 30 und 1000 mittels einer wäßrigen Lösung von Kupfer und/oder Silbersalzen imprägniert.

7. Verfahren zum Entfernen von Quecksilber aus Gasen, insbesondere aus Erdgas, Spaltgas und/oder Abgas, dadurch gekennzeichnet, daß man das Gas über einen siliciumreichen Zeolithen mit einem SiO₂/Al₂O₃-Verhältnis zwischen 30 und 1000, der mit den Metallen Kupfer und/oder Silber imprägniert ist, führt.

8. Verfahren nach Anspruch 7, dadurch gekennzeichnet, daß der Zeolith ein Zeolith vom Strukturtyp FAU, MFI oder MOR ist.

9. Verfahren nach den Ansprüchen 7 oder 8, dadurch gekennzeichnet, daß man den Zeolith als Formkörper mit einem Bindemittelgehalt von 5 bis 50 Prozent einsetzt.

10. Verfahren nach den Ansprüche 7 bis 9, dadurch gekennzeichnet, daß der Metallgehalt der imprägnierten Zeolith-Formkörper zwischen 0,1 und 20 Massenprozent, bevorzugt zwischen 1 und 10 Massenprozent, beträgt.

11. Verfahren nach den Ansprüchen 7 bis 10, dadurch gekennzeichnet, daß die Metalle Kupfer und/oder Silber sowohl in elementarer als auch in ionischer Form auf dem Zeolithen vorliegen.

12. Verfahren nach den Ansprüchen 7 bis 11, dadurch gekennzeichnet, daß das Gas eine relative Luftfeuchte zwischen 5 und 90 Prozent aufweist und SO₂ und/oder HCl in Mengen zwischen 0,1 und 1000 mg/Nm³ enthält.
